Europäisches Patentamt

European Patent Office

Office européen des brevets

(19)

(11) EP 0 757 498 A1

## (12) DEMANDE DE BREVET EUROPEEN

(43) Date de publication:
05.02.1997 Bulletin 1997/06

(51) Int Cl.$^6$: H04N 9/31

(21) Numéro de dépôt: 96401672.9

(22) Date de dépôt: 25.07.1996

(84) Etats contractants désignés:
DE FR GB

(30) Priorité: 02.08.1995 FR 9509424

(71) Demandeur: THOMSON multimedia
92400 Courbevoie (FR)

(72) Inventeur: Watrin, Thierry
92050 Paris la Defense Cedex (FR)

(74) Mandataire: Ruellan-Lemonnier, Brigitte et al
THOMSON Multimedia,
9 Place des Vosges
La Défense 5
92050 Paris La Défense (FR)

(54) **Procédé pour correction des défauts de chromaticité et de luminance d'un écran matriciel et écran matriciel et circuit mettant en oeuvre un tel procédé**

(57) La présente invention concerne un procédé de correction des défauts de chromaticité et de luminance des images formées par un projecteur, notamment un projecteur mettant en oeuvre des écrans matriciels, consistant à enregistrer dans au moins une mémoire, au moins une table de compensation desdits défauts et a multiplier, pixel par pixel, les signaux vidéos $R_{in}$, $G_{in}$ et $B_{in}$ provenant du décodeur de couleurs, par le contenu de la carte mémoire.

Fig. 3

EP 0 757 498 A1

## Description

La présente invention se rapporte au domaine de la visualisation d'images par un projecteur ou rétroprojecteur formant une image sur un écran distant du projecteur. Elle concerne en particulier des projecteurs mettant en oeuvre un écran matriciel plus particulièrement un écran de type LCD. On entendra dans la suite du texte par "projecteur" tout moyen propre à former à distance une image sur un écran.

L'invention concerne plus particulièrement la correction de défauts d'équilibre chromatique et de luminance.

De tels projecteurs sont connus dans l'état de la technique. L'homme de métier s'est attaché à réduire les défauts affectant les images, en particulier lorsqu'il s'agit d'images de haute qualité destinées à être visualisées sur un écran de grande dimension, tel qu'un mur d'image. Les défauts liés à ce type de projection sont de différents ordres :

- défauts géométriques : l'image présente des déformations en barillet en l'absence de correction
- défauts de focalisation
- défauts d'alignement des tubes formant l'image trichrome
- défauts dus à des variations dans le temps.

On a proposé dans l'état de la technique des procédés et moyens permettant de corriger au moins en partie de tels défauts. A titre d'exemple, le brevet FR2652695 décrit un procédé de correction automatique de défauts consistant à analyser l'écran au travers d'un filtre spatial et à recourir à deux phases successives d'acquisition d'une image test et de correction des paramètres de formation de l'image vidéo.

Ce procédé ne permet toutefois pas de corriger de façon satisfaisante les défauts relatifs à l'équilibre chromatique, notamment dans les zones périphériques de l'écran, ou à la non homogénéité de la luminance.

L'objet de la présente invention est de remédier à ces inconvénients par un procédé et des moyens consistant à analyser l'image formée avant correction, à comparer l'image projetée avec l'image de référence, à calculer une table de correction, à charger cette table de correction dans une mémoire rapide et à corriger le signal vidéo commandant les moyens de formation de l'image avec les données ainsi mémorisées.

L'invention concerne plus particulièrement un procédé de correction des défauts de chromaticité et de luminance des images formées par un projecteur, notamment un projecteur, mettant en oeuvre des écrans matriciels tels que les écrans à cristaux liquides LCD, consistant à enregistrer dans au moins une table de compensation desdits défauts et à multiplier, pixel par pixel, les signaux vidéos R-G-B par le contenu de ladite mémoire.

Selon une variante de réalisation, on applique une correction unitaire sur la partie faiblement altérée des images. Ce mode de mise en oeuvre du procédé permet de réduire la capacité des mémoires, la correction n'étant appliquée que sur les zones de plus fortes aberrations, telles les zones périphériques de l'écran.

Selon une autre variante de mise en oeuvre, on pondère, pour chaque pixel, la correction apportée aux trois composantes R-G-B du signal vidéo par le signal de luminance. Ce mode de mise en oeuvre permet de privilégier la fidélité chromatique au détriment de l'homogénéité de la luminance

Selon une autre variante, on pondère, pour chaque pixel, la correction apportée aux trois composantes R-G-B du signal vidéo par la valeur du plus grand des signaux R-G-B.

L'invention sera mieux comprise dans ce qui suit, à la lecture de la description faisant référence aux dessins annexés où :

- les figures 1 et 2 représentent un exemple des courbes de la répartition spatiale de l'intensité lumineuse;
- la figure 3 représente le schéma de principe d'un circuit de correction pour la mise en oeuvre d'une première variante de réalisation du circuit de correction ;
- la figure 4 représente le schéma de principe d'un circuit de correction pour la mise en oeuvre d'une deuxième variante de réalisation du circuit de correction.
- la figure 5 représente un mode de réalisation du circuit de correction.

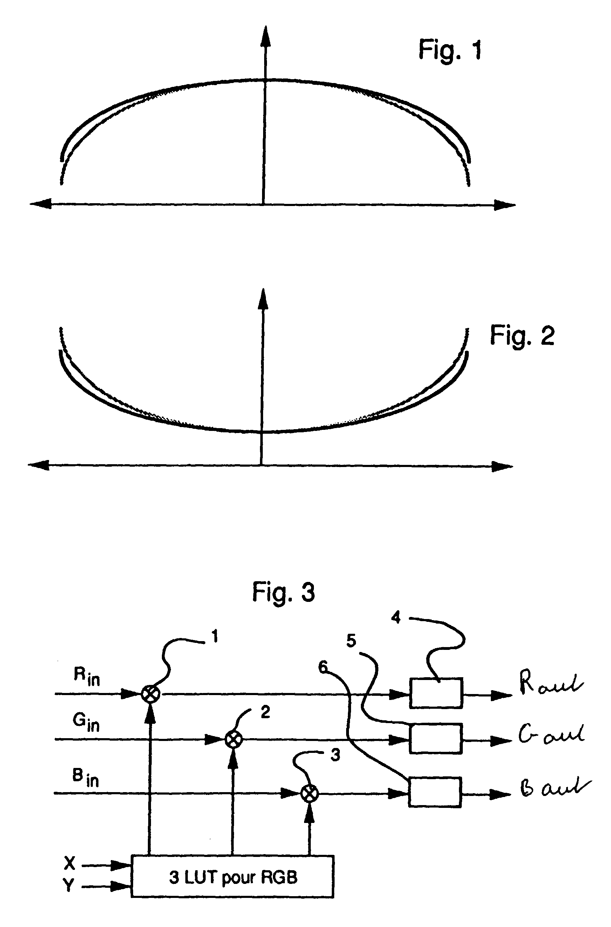

La figure 1 représente un exemple des courbes spatiales de répartition de l'intensité lumineuse, pour le rouge (courbe en gris) et pour le vert et le bleu (courbe noire).

Les défauts chromatiques et de non-homogonéité de la luminance sont principalement imputables à la source lumineuse et aux filtres dichroïques. Par ailleurs, lorsque le spectre d'émission de la source lumineuse est déséquilibré, l'écran présente des taches colorées.

Le procédé selon l'invention est destiné à compenser les deux principaux types d'aberrations suivants :

- les pertes de luminosité dans les angles de l'écran,
- les déséquilibres chromatiques locaux se traduisant par des taches colorées sur une plage blanche.

Le premier type d'aberration concerne les trois composantes R-G-B du signal vidéo. Il se traduit par un affaiblissement de l'intensité lumineuse dans des zones périphériques et plus particulièrement dans les angles.

La compensation de ces aberrations spatiales consiste à appliquer une correction dont la courbe représentée en figure 2 est complémentaire de la courbe de répartition spatiale de l'intensité lumineuse.

Pour déterminer la courbe de répartition spatiale avant correction, on utilise une image de référence, par exemple une image formée par une zone uniformément blanche ou grise, et on mesure, point par point, la luminosité, à l'aide d'une caméra ou d'un analyseur de luminosité, pour réaliser une cartographie, pour les trois couleurs primaires rouge, vert et bleu, précise de la luminosité de l'image réelle formée par le projecteur LCD. On transcrit cette information représentative des aberrations spatiales sur un support informatique de façon à mémoriser une table numérique permettant de calculer la table de compensation.

La figure 3 représente le schéma de principe d'un premier circuit de correction.

Ce circuit de correction est interposé entre le décodeur de couleurs et l'étage finale du circuit vidéo délivrant les signaux de commande des panneaux LCD correspondant aux trois couleurs RGB. Le circuit reçoit les trois signaux numériques RGB codés en 8 ou 12 bits par exemple. Le circuit comporte 3 tables de conversion (Lock Up Table) $LUT_R$, $LUT_G$ et $LUT_B$ adressées par le signal de balayage XY provenant des circuits de commande au drivers X et Y. Ces tables de conversion sont constituées par une mémoire de type RAM d'une capacité de M*N*r*3 bits, où M*N désignant le nombre de pixels de l'écran et r le nombre de bits de codage, par exemple 960*560*8 bits pour chacune des 3 couleurs.

En réponse à chaque combinaison de signaux de balayage (x,y), la mémoire LUT génère un signal numérique de correction

$$\begin{bmatrix} C_{R,x,y} \\ C_{G,x,y} \\ C_{B,x,y} \end{bmatrix}$$

codé sur 8 bits. Une série de 3 multiplicateurs (1, 2, 3) délivre des signaux vidéo corrigés qui sont ensuite traités par des circuits d'écrétage (4, 5, 6).

Le circuit de correction selon ce premier mode de réalisation délivre donc un signal de sortie

$$\begin{bmatrix} R_{out} \\ G_{out} \\ B_{out} \end{bmatrix}(x,y) = \begin{bmatrix} \min(100, R_{in} * C_{R,X,Y}) \\ \min(100, G_{in} * C_{G,X,Y}) \\ \min(100, B_{in} * C_{B,X,Y}) \end{bmatrix}(x,y)$$

où 100 désigne l'amplitude maximale du signal alimentant l'écran LCD.

Le circuit selon ce premier mode de réalisation peut être amélioré de manière à augmenter l'efficacité de la correction dans quelques situations particulières :

- lorsque la compensation doit affecter un pixel dont le niveau de luminosité atteint la valeur maximale ;
- lorsque la correction appliquée à l'un des signaux RGB est importante et dépasse le seuil d'écretage. Dans cette situation particulière, le signal vidéo présente un défaut chromatique
- lorsque le défaut de luminance ou de chromaticité est très ponctuel et ne concerne qu'un très faible nombre de pixels. Cette situation se traduit par la perte de certains détails de l'image.

La première situation est impossible à améliorer : lorsque l'image à projeter correspond à une image totalement blanche, pour laquelle chacune des composantes vidéo Rin, Gin et Bin correspond à la valeur maximale avant traitement par le circuit de correction selon l'invention, il n'est pas possible d'augmenter l'une des composantes chromatiques en multipliant le signal d'entrée par le contenu de la mémoire LUT.

La deuxième situation concerne l'écrétage de l'un seulement des signaux corrigé par multiplication avec le signal délivré par la mémoire LUT, qui se traduit par une distorsion chromatique. Afin d'éviter une telle distorsion chromatique, on peut appliquer au signal vidéo (Rin, Gin, Bin)$_{(x,y)}$ une correction plafonnée par une valeur

$$LUT_{out} = (Rin, Gin, Bin,)_{max} / LUT_{in}$$

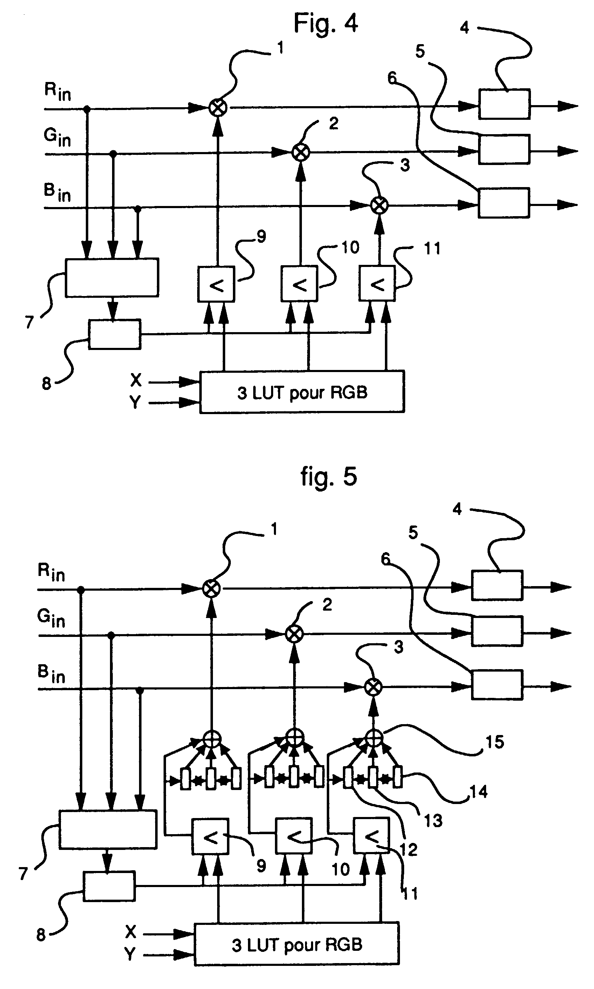

La figure 4 représente le schéma de principe d'un circuit de correction pour la mise en oeuvre d'un tel procédé de correction.

Il comprend outre les mémoires dans lesquelles sont enregistrées les tables de corrections $LUT_R$, $LUT_G$, $LUT_B$ une mémoire (8) $LUT_{max}$ dont l'entrée est raccordée à un comparateur (7) délivrant en sortie la valeur du plus grand des trois signaux numériques Rin, Gin, Bin reçus à l'entrée du circuit de correction. Les multiplicateurs (1, 2, 3) reçoivent les signaux provenant respectivement de trois comparateurs (9, 10, 11) délivrant un signal dont la valeur numérique correspond à la valeur du plus petit des signaux venant pour le premier de la mémoire $LUT_{max}$ (8) et pour le second de la table de correction correspondant respectivement à la composante rouge, à la composante verte et à la composante bleue.

Une autre amélioration du procédé selon l'invention consiste à lisser les facteurs de correction afin d'éviter la disparition de certains détails de l'image du fait d'une trop forte correction chromatique. On accepte selon cette variante une distorsion chromatique ponctuelle afin de préserver la finesse de la restitution des images.

Un circuit pour la mise en oeuvre de cette variante est décrite en figure 5.

Le facteur de correction généré par les tables de corrections $LUT_R$, $LUT_G$, $LUT_B$ sont transmises à une série de registres à décalage (12, 13, 14) et à un additionneur (15) de façon à transmettre au multiplicateur (1, 2, 3) un facteur correspondant à une correction moyennée sur plusieurs pixels consécutifs. Ainsi, la correction peut être réalisée en multipliant pour chaque pixel PI les signaux vidéos $R_{in}$, $G_{in}$ et $B_{in}$ provenant du décodeur de couleurs, par un coefficient correspondant à la valeur moeynne sur une pluralité de pixels précédents (Pi-n ; Pi) du contenu des mémoires respectivement $LIT_R$, $LUT_G$, $LUT_B$.

Selon un autre mode de réalisation, la correction peut être obtenue en déterminant pour chaque pixel Pi, des facteurs de corrections $CI_{R,G,B}$ correspondant à la plus petite des valeurs V1 et V2 où

- V1 désigne la valeur de correction maximale applicable aux signaux $R_{in}$, $G_{in}$, et $B_{in}$ sans écretage par le circuit de correction, et
- V2 désigne la valeur des tables de correction $LUT_R$, $LUT_G$, $LUT_B$

et en multipliant les signaux vidéos $R_{in}$, $G_{in}$ et $B_{in}$ provenant du décodeur de couleurs, par des coefficients $C_{R,G,B}$.

Les aberrations se produisent essentiellement sur les zones périphériques de l'image, en particulier dans les angles. Afin de réduire la capacité des mémoires $LUT_R$, $LUT_G$, $LUT_B$, il est possible de n'appliquer une correction que pour des valeurs (x,y) correspondant auxdites zones périphériques, et à appliquer une correction unitaire pour les autres zones.

L'écretage des signaux peut être réalisé par le troncage des signaux issus des multiplicateurs, pour transformer par exemple des signaux de 12 bits en signaux ne comportant plus que les 8 bits les moins significatifs.

La présente invention est décrite dans ce qui précède de façon non limitative. Il est bien évident que l'Homme de Métier sera à même de réaliser différentes variantes sans pour autant sortir du cadre de l'invention.

## Revendications

1. Procédé de correction des défauts de chromaticité et de luminance des images formées par un projecteur, notamment un projecteur mettant en oeuvre des écrans matriciels, consistant à enregistrer dans au moins une mémoire, au moins une table de compensation desdits défauts et à multiplier, pixel par pixel, les signaux vidéos $R_{in}$, $G_{in}$ et $B_{in}$ provenant du décodeur de couleurs, par le contenu de la carte mémoire.

2. Procédé de correction des défauts de chromaticité et de luminance selon la revendication 1, caractérisé en ce que l'on applique une correction unitaire sur la partie faiblement altérée des images.

3. Procédé de correction des défauts de chromaticité et de luminance selon l'une quelconque des revendications précédentes caractérisé, en ce que, pour chaque pixel, on limite la correction apportée aux trois composantes R-G-B du signal vidéo par une valeur plafond $LUT_{out} = (Rin, Gin, Bin,)_{max} / LUT_{in}$.

4. Procédé de correction des défauts de chromaticité et de luminance selon la revendication 1 caractérisé en ce que, pour chaque pixel Pi, on multiplie les signaux vidéos $R_{in}$, $G_{in}$ et $B_{in}$ provenant du décodeur de couleurs, par un coefficient correspondant à la valeur moyenne sur une pluralité de pixels précédents {Pi-n; Pi} du contenu des mémoires respectivement $LUT_R$, $LUT_G$, $LUT_B$.

**5.** Procédé de correction des défauts de chromaticité et de luminance selon la revendication 1, caractérisé en ce que, pour chaque pixel Pi, on détermine des facteurs de correction $Ci_{R, G, B}$ correspondant à la plus petite des valeurs V1 et V2 où

- V1 désigne la valeur de correction maximale applicable aux signaux $R_{in}$, $G_{in}$ et $B_{in}$ sans écretage par le circuit de correction, et
- V2 désigne la valeur des tables de correction $LUT_R$, $LUT_G$, $LUT_B$

et en ce que l'on multiplie les signaux vidéos $R_{in}$, $G_{in}$ et $B_{in}$ provenant du décodeur de couleurs, par des coefficients $C_{R, G, B}$ correspondant à la valeur moyenne des signaux sur une pluralité de pixels précédents {Pi-n; Pi} des coefficients $Ci_{R, G, B}$.

**6.** Circuit de correction des défauts de chromaticité et de luminance des images formées par un projecteur, notamment un projecteur mettant en oeuvre des écrans matriciels, caractérisé en ce qu'il comporte trois mémoires dans lesquelles sont enregistrées les tables de corrections $LUT_R$, $LUT_G$, $LUT_B$ pour la compensation desdits défauts, et trois multiplicateurs délivrant des signaux de sortie $R_{out}$, $G_{out}$ et $B_{out}$ correspondant au produit entre respectivement les signaux vidéo $R_{in}$, $G_{in}$ et $B_{in}$ provenant du décodeur de couleurs et le contenu desdites mémoires respectivement $LUT_R$, $LUT_G$, $LUT_B$.

**7.** Circuit de correction des défauts de chromaticité et de luminance des images formées par un projecteur, notamment un projecteur mettant en oeuvre des écrans matriciels, selon la revendication 6, caractérisé en ce qu'il comporte en outre un circuit comparateur propre à délivrer un signal $(RGB)_{max}$ correspondant à la plus grande des trois valeurs $R_{in}$, $G_{in}$ et $B_{in}$, et une mémoire délivrant un signal $LUT_{out} = (RGB)_{max}/LUT_{in}$, le circuit de correction comportant en outre 3 comparateurs recevant en entrée d'une part le signal $LUT_{out}$ et d'autre part le signal délivré respectivement par les mémoires $LUT_R$, $LUT_G$, $LUT_B$ et délivrant des signaux de sortie correspondant à la plus petite desdites deux valeurs, lesdits signaux de sortie étant transmis aux multiplicateurs délivrant les signaux de sortie $R_{out}$, $G_{out}$ et $B_{out}$.

**8.** Circuit de correction des défauts de chromaticité et de luminance des images formées par un projecteur, notamment un projecteur mettant en oeuvre des écrans matriciels, selon la revendication 6 ou 7, caractérisé en ce qu'il comporte en outre trois additionneurs délivrant aux multiplicateurs (1 à 3) des signaux de correction correspondant à la valeur moyenne des signaux de correction pour une pluralité de pixels précédents.

Fig. 1

Fig. 2

Fig. 3

R_in
G_in
B_in

1

2

3

6

5

4

R out

G out

B out

X
Y

3 LUT pour RGB

## Fig. 4

## fig. 5

**Office européen des brevets**

# RAPPORT DE RECHERCHE EUROPEENNE

Numero de la demande

EP 96 40 1672

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>A | WO-A-91 15923 (RANK LIMITED)<br>* page 11, ligne 23 - page 19, ligne 10 *<br>* page 8, ligne 13 - page 9, ligne 10 * | 1,6<br>2-5,7,8 | H04N9/31 |
| X<br>A | EP-A-0 595 649 (SHARP)<br>* colonne 13, ligne 50 - colonne 16, ligne 35 * | 1,6<br>2-5,7,8 | |
| X | US-A-5 315 378 (SATOU & AL.)<br>* colonne 9, ligne 29 - colonne 13, ligne 14 * | 1,6 | |
| X | PATENT ABSTRACTS OF JAPAN<br>vol. 17, no. 213 (E-1356), 26 Avril 1993<br>& JP-A-04 351189 (KOUDO EIZOU GIJIYUTSU)<br>* abrégé * | 1,6 | |
| X | PATENT ABSTRACTS OF JAPAN<br>vol. 12, no. 250 (E [633] , 14 Juillet 1988<br>& JP-A-63 037785 (TOSHIBA)<br>* abrégé * | 1,6 | |
| X | EP-A-0 448 480 (THOMSON-CSF)<br>* colonne 5, ligne 45 - colonne 6, ligne 13 * | 1,6 | **DOMAINES TECHNIQUES RECHERCHES (Int.Cl.6)**<br><br>H04N |
| A | EP-A-0 402 137 (MATSUSHITA)<br>* colonne 6, ligne 7 - colonne 8, ligne 34 * | 1-8 | |
| A | US-A-4 962 418 (KAMAGA)<br>* abrégé * | 1,6 | |
| A | GB-A-2 169 773 (KAMAGA)<br>* abrégé * | 1,6 | |

Le présent rapport a été établi pour toutes les revendications

| Lieu de la recherche | Date d'achèvement de la recherche | Examinateur |
|---|---|---|
| LA HAYE | 11 Septembre 1996 | Pigniez, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)